# EUROPEAN PATENT SPECIFICATION

(11) **EP 2 929 731 B1**
(45) Date of publication and mention of the grant of the patent: **23.09.2020**
(21) Application number: 13860504.3
(22) Date of filing: 09.08.2013
(51) Int. Cl.: H04W 52/02, H04W 36/24, H04W 52/28, H04W 36/00, H04W 4/00, H04W 28/02, H04W 16/32, H04W 84/18, H04W 88/06, H04W 8/22, H04W 48/16

(54) **APPARATUS AND METHOD FOR ENHANCED MOBILE POWER MANAGEMENT**
VORRICHTUNG UND VERFAHREN FÜR VERBESSERTE MOBILLEISTUNGSVERWALTUNG
APPAREIL ET PROCÉDÉ DE GESTION AMÉLIORÉE D'ALIMENTATION DES MOBILES

(30) Priority: 04.12.2012 WO PCT/CN2012/085849
(43) Date of publication of application: 14.10.2015
(73) Proprietor: Qualcomm Incorporated, San Diego, CA 92121-1714 (US)
(72) Inventor: YAZDI, Seyed Mohammadsadegh Tabatabaei, San Diego, California 92121-1714 (US); ZHU, Xipeng, San Diego, California 92121-1714 (US); PICA, Francesco, San Diego, California 92121-1714 (US); KAPOOR, Rohit, San Diego, California 92121-1714 (US); SAMBHWANI, Sharad Deepak, San Diego, California 92121-1714 (US); JOOTAR, Jittra, San Diego, California 92121-1714 (US)
(74) Representative: Dunlop, Hugh Christopher
(86) International application number: PCT/CN2013/081178
(87) International publication number: WO 2014/086168

(56) References cited:
- CN-A- 101 207 885
- CN-A- 101 444 021
- CN-A- 102 281 577
- CN-A- 102 665 245
- GB-A- 2 479 937
- US-A1- 2005 096 053
- US-A1- 2007 225 051
- US-A1- 2009 239 535

## Description

### BACKGROUND

### Field

Aspects of the present disclosure relate generally to wireless communication systems, and more particularly, to enhanced mobile power management.

### Background

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD- SCDMA). The UMTS also supports enhanced 3G data communications protocols, such as High Speed Packet Access (HSPA), which provides higher data transfer speeds and capacity to associated UMTS networks.

As the demand for mobile broadband access continues to increase, research and development continue to advance the UMTS technologies not only to meet the growing demand for mobile broadband access, but to advance and enhance the user experience with mobile communications.

It is noted that one problem with current implementations relates to the high power consumption in mobile devices caused by excessive measurements made during idle mode.

US2007/0225051A1 describes a method that determines when and/or what measurements user equipment in a telecommunication system will make of its surrounding environment.

GB 2479937A relates to management of storage of measurement data. A set of measurement data comprising a value of each of a plurality of parameters is managed, for example at a user equipment of a wireless network. It is determined whether a value of at least one of the parameters, e.g. a descriptor of a geographical location or a power level of a radio signal, has changed by more than a threshold amount from a value of the parameter in a previously stored set of measurement data and, dependent on the determination being affirmative, the set of measurement data is stored. Thus, the amount of information to be stored at the user equipment may be reduced. Measurement of the parameters may be in response to a request from the wireless network and the set of measurement data may be sent to the wireless network.

### SUMMARY

The invention relates to a method of power management in a wireless communication network, an apparatus and a computer-readable medium as set forth in the claims.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The features, nature, and advantages of the present disclosure will become more apparent from the detailed description set forth below when taken in conjunction with the drawings in which like reference characters identify correspondingly throughout and wherein:
Fig. 1 is a schematic diagram of a user equipment performing a power management procedure in a network;
Fig. 2 is a chart illustrating conventional UE measurement characteristics, e.g., according to Fig. 1;
Fig. 3 is a chart illustrating UE measurement characteristics using present aspects, e.g., according to Fig. 1;
Fig 4 is a flow chart of an aspect of a method of power management, e.g., according to Fig. 1;
Fig. 5 is a block diagram illustrating an example of a hardware implementation for an apparatus employing a processing system, e.g., according to Fig. 1;
Fig. 6 is a block diagram conceptually illustrating an example of a telecommunications system including at least an aspect of the user equipment described herein;
Fig. 7 is a conceptual diagram illustrating an example of an access network, e.g., according to Fig. 1
Fig. 8 is a conceptual diagram illustrating an example of a radio protocol architecture for the user and control plane that may be utilized by the user equipment described herein; and
Fig. 9 is a block diagram conceptually illustrating an example of a Node B in communication with a UE in a telecommunications system, where the user equipment may be the same as or similar to the user equipment described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

The present aspects generally relate to enhancing power management in a user equipment (UE) to provide greater battery duration to devices desiring long operation time. Various aspects of the disclosure address an issue relating to the excessive measurements conducted by a UE while in idle mode. In some aspects, it may not be efficient for the UE to utilize the conventional or full range of measurements during idle mode. For example, the UE identified as a stationary extra-long battery device may not desire the full range of idle mode measurements so as to increase or enhance the operational duration of the UE.

Moreover, such measurements may be considered too frequent, and as a result, may increase the rate of power consumption. Accordingly, the UE may desire a more efficient allocation of resources based on their respective operational parameters and/or current or expected state. That is, the UE identified as, or expected to remain stationary for a long duration, or even desiring longer operation time, may desire adjustment of conventional communication operation parameters so as to decrease power consumption. As such, in some aspects, the present apparatus and method may provide an efficient solution, as compared to current solutions, to adjust the triggering of idle mode measurements to assist in preserving mobile power.

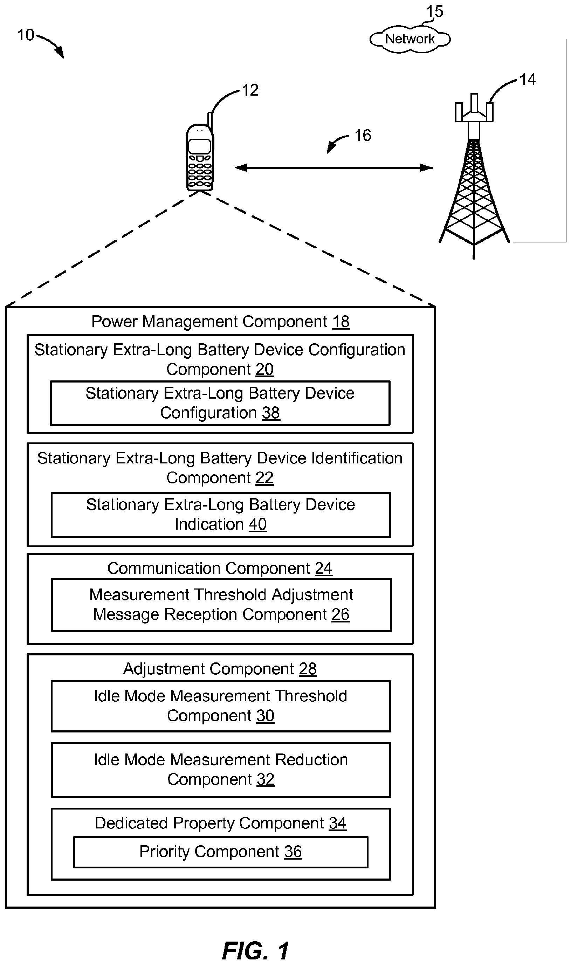

Referring to Fig. 1, in an aspect, a wireless communication system 10 includes UE 12 in communication coverage of at least one network entity 14. In some examples, wireless communication between UE 12 and network entity 14 may occur on one or more wireless communication channels 16. Further, UE 12 may communicate with network 15 by way of at least one network entity, for example, network entity 14.

In some aspects, UE 12 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a terminal, a user agent, a mobile client, a client, or some other suitable terminology. Additionally, network entity 14 may be a macrocell, picocell, femtocell, relay, Node B, mobile Node B, UE (e.g., communicating in peer-to-peer or ad-hoc mode with UE 12), or substantially any type of component that can communicate with UE 12 to provide wireless network access at the UE 12.

In one aspect, UE 12 may include power management component 18, which may be configured to provide efficient power management to UE 12. For example, power management component 18 may be configured to adjust an idle mode measurement threshold when UE 12 is identified as a device desiring or capable of an extended or extra-long operation. In adjusting the idle mode measurement threshold, UE 12 may be configured to, for instance, decrease power consumption by limiting the number or frequency of measurements occurring during idle mode.

In an aspect, power management component 18 may include a stationary extra-long battery device configuration component, which may be operable to configure the UE 12 with a stationary extra-long battery device configuration 38. In some aspects, a stationary extra-long battery device configuration 38 means that UE 12 will minimize a number of measurement(s), a frequency of given measurement(s), and/or a measurement threshold(s) during idle mode.

UE 12 may be configured, for example but not limited hereto, with stationary extra-long battery device configuration 38, by provisioning UE 12 using at least one of provisioning via a user input and/or receiving an over-the-air message according to an open mobile alliance device management (OMA-DM) protocol. In further aspects, UE 12 may be configured based on device type or international mobile subscriber identity (IMSI) provisioning at the core network or evolved packet core (EPC). As a further example, configuration of the UE 12 may be made based on the operating environment of the UE 12. For instance, the UE 12 may be utilizing a low capacity power supply (e.g., battery) and as a result, desires a decreased frequency of measurements during idle mode.

Moreover, for instance, the UE 12 may be located in areas where access to the UE 12 for power supply charging or replacement is very difficult (e.g., sensors located in container tanks). Further, in some aspects, a network operator, a network device, a UE manufacturer, or some other entity may pre-program (e.g., prior to UE operation) or program (e.g., based on UE operation) the UE 12 with the stationary extra-long battery device configuration 38. Also, in some aspects, UE 12 may configure itself with the stationary extra-long battery device configuration 38.

Additionally, power management component 18 may include stationary extra-long battery device identification component 22, which may be configured to identify UE 12 as operating according to stationary extra-long battery device configuration 38. The stationary extra-long battery device configuration may be identified, for example but not limited hereto, based on device characteristics and/or thresholds. For example, UE 12 may be identified as having an extra-long battery device configuration 38 by sending a transmission or message to network entity 14, such as stationary extra-long battery device indication 40.

For example, the transmission or message may be sent by a core network (CN) or UE 12. For instance, the stationary extra-long battery device indication 40 may be a new UE capability bit or a designated signal that identifies UE 12 as operating according to stationary extra-long battery device configuration 38. In other words, the stationary extra-long battery device indication 40 informs network 15 of a capability by UE 12 to adjust idle mode measurements and operate for longer durations. As a further example, UE 12 may be identified as operating according to stationary extra-long battery device configuration 38 based on a particular type or class of devices associated with UE 12.

For instance, a machine type communication (MTC) device may be identified as operating according to the stationary extra-long battery device configuration 38. Hence, upon identifying or otherwise determining UE 12 as an MTC device, operation according to the stationary extra-long battery device configuration 38 may be commenced. Furthermore, UE 12 may be identified as a stationary extra-long battery device if a power level or finite power supply of UE 12 falls below a power supply threshold value. As such, UEs desiring long power supply operation time may be configured to include power management component 18 in order to operate according to the stationary extra-long battery device configuration 38.

In further aspects, power management component 18 may include communication component 24, which may be configured to communicate with network 15 via network entity 14 using one or more wireless communication channels 16. For example, in an aspect, communication component 24 may send the stationary extra-long battery device indication 40 to network entity 14 via one or more wireless communication channels 16.

Further, in some aspects, the communication component 24 may send the stationary extra-long battery device indication 40 in any plane (e.g., user plane or control plane) or physical layer (e.g., MAC, RLC, PDP and RRC). In an aspect, communication component 24 may include a measurement threshold adjustment message reception component 26, which may be configured to receive a measurement threshold adjustment message from, for instance, network entity 14, so as to adjust a measurement threshold that triggers one or more idle mode measurements. For example, the measurement threshold adjustment message reception component 26 may receive a system information block (SIB) from the network. The SIB may, for instance, include specific UE measurement or reselection parameters and may be transmitted to UE 12 on a broadcast channel (e.g., one or more wireless communication channel 16). The UE specific measurement or reselection parameters may include at least one of legacy cell reselection parameters, hierarchical cell structure (HCS) parameters, absolute priority reselection parameters and intra/inter-frequency parameters.

Moreover, in an aspect, power management component 18 may include adjustment component 28, which may be configured to adjust an idle mode cell measurement threshold based on the measurement threshold adjustment message. For instance, upon receiving measurement threshold adjustment message, adjustment component 28 may determine the particular measurement parameter to adjust in order to decrease power consumption. Adjustment component 28 may, for example, include idle mode measurement threshold component 30, which may be configured to adjust (e.g., decrease) a value of the idle mode cell measurement threshold from a current idle mode measurement threshold value to a decreased idle mode measurement threshold value.

Further, adjustment component 28 may include idle mode measurement reduction component 32, which may be configured to reduce a number or a frequency of cell measurements. By way of a non-limiting example, an adjustment may be made to decrease the number of cell measurements (e.g., signal strength measurements and/or cell searches) per a given time frame (e.g., 10 ms). In some aspects, adjustment component 28 may further include dedicated property component 34, which may be configured to adjust a dedicated property of UE 12.

For instance, dedicated property component 34 may include priority component 36 which may adjust at least one idle mode cell measurement or reselection priority. For instance, priority component 36 may designate operation in UMTS as higher priority than operation in LTE. As such, in such non-limiting cases, UE 12 may communicate in the preferred UMTS technology based on the adjusted priority. The opposite may also be the case where UE 12 may communicate using the preferred LTE technology when LTE is designated as preferred. As a further example, adjustment component 28, through any one of the subcomponents 30, 32, and 34, may control how often UE 12 searches for the network (e.g., PLMN search). Further, it should be understood that adjustment component 28, may be configured to adjust a plurality of idle mode cell measurement thresholds simultaneously. For instance, the received measurement threshold adjustment message may indicate to UE 12 to adjust a plurality of idle mode cell measurement thresholds.

Table 1 below lists example adjustable idle mode measurements and/or reselection parameters that may be adjusted by UE 12 via adjustment component 28. It should be noted that Table 1 may be extended, as appropriate, to other communication technologies, such as but not limited to GSM and CDMA 1x/eHRPD.

**Table 1: Example Adjustable Idle Mode Measurement/Reselection Parameters**

| **UMTS** | **LTE** |
|---|---|
| Sintrasearch | Sintrasearch |
| Sintersearch | Qhyst/Qoffset |
| SsearchRAT | Treselection_EUTRA |
| ShcsRAT | Snonintrasearch |
| Qhyst/Qoffset | Treselection_RAT |
| Treselection | |
| SsearcdHCS | |
| ShcsRAT | |
| Sprioritysearch1/2 | |

The implementation of power management component 18 and its corresponding functions may, in some aspects, apply to numerous modes. For example, the cell reselection measurements may be used in various modes in RRC, such as, but not limited to, Idle, Forward Access Channel (CELL_FACH), Cell Paging Channel (CELL_PCH) and a UTRAN Registration Area (CELL_URA). The foregoing RRC modes operate at a lower power relative to CELL_DCH.

It should be understood that an adjustment of the cell measurement threshold may also occur in an active or connected state. That is, a UE such as UE 12 can adjust a connected mode measurement threshold based on the measurement threshold adjustment message. Moreover, in some aspects, the various threshold values, such as the idle mode measurement threshold value may be configurable. That is, the threshold values may be set by a network device (for example using RRC signaling messages), network operator (for example provisioning UE specific policies), or other entity communicating with UE 12.

Further, it should be understood that the term "mode," with respect to the various operational modes of UE 12 mentioned in the foregoing aspects, can be used interchangeably with state and/or configuration.

Thus, when UE 12 is identified as operating according to the stationary extra-long battery device configuration 38, UE 12 may execute power management component 18 to enhance the power consumption efficiency and/or battery life by adjusting an idle mode cell measurement threshold based on the measurement threshold adjustment message.

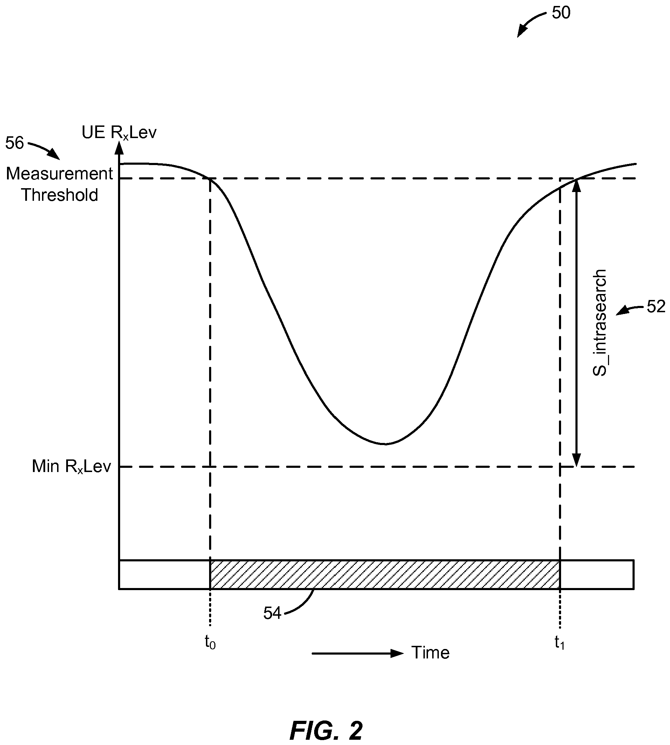

Referring to Fig. 2, in an aspect, chart 50 illustrates a UE measurement state prior to idle mode cell measurement threshold adjustment or UEs without power management component 18. In such a measurement state, the UE engages in S_intrasearch 52 triggered measurements from time t₀ to t₁. At time t₀ the UE radio strength level (RxLev) falls below measurement threshold 56 and coincidently triggers S_intrasearch criteria to become true. The intra-frequency measurement will occur until the UE surpasses the measurement threshold at time t₁. In the foregoing time period 54, the UE may engage in needless intra-frequency measurements 52 that drain the UE power supply. S_intrasearch 52 is a parameter provided by the network that specifies the threshold below which intra-frequency measurements should be performed.

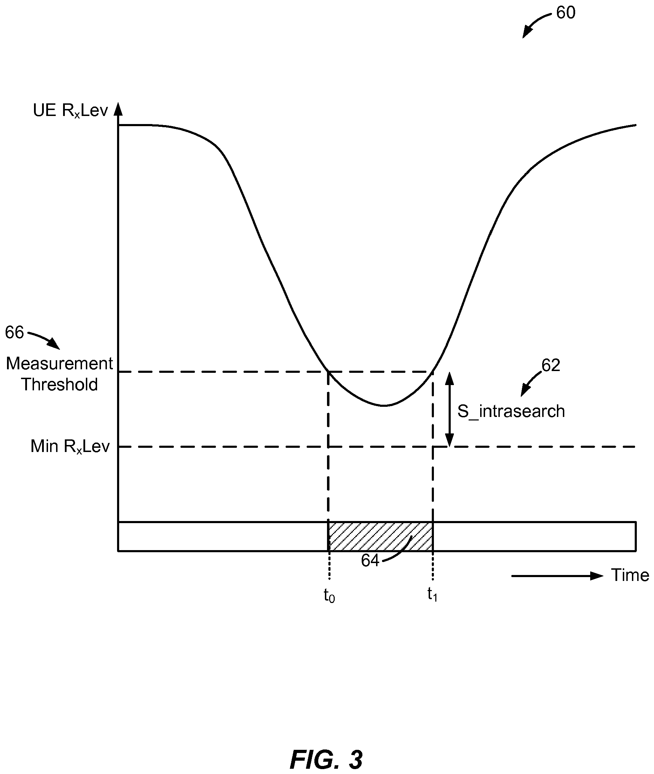

In contrast, referring to Fig. 3, chart 60 illustrates a UE measurement state following idle mode cell measurement threshold adjustment. In such a measurement state, the UE engages in S_intrasearch 62 triggered measurements from time t₀ to t₁. At time t₀ the UE radio strength level (RxLev) falls below measurement threshold 66 and coincidently triggers S_intrasearch criteria to become true. The intra-frequency measurement will occur until the UE surpasses the measurement threshold at time t₁. As a result of the adjusted measurement threshold 66, the duration 64 of intra-frequency measurements is significantly reduced, thereby reducing the power consumption and increasing power efficiency.

It should be understood that S_intrasearch 52 measurements have been used as an example, and that other idle mode measurement or reselection parameter thresholds may be used. For example, Table 1 lists a number of further idle mode measurement or reselection parameters that may have their thresholds adjusted.

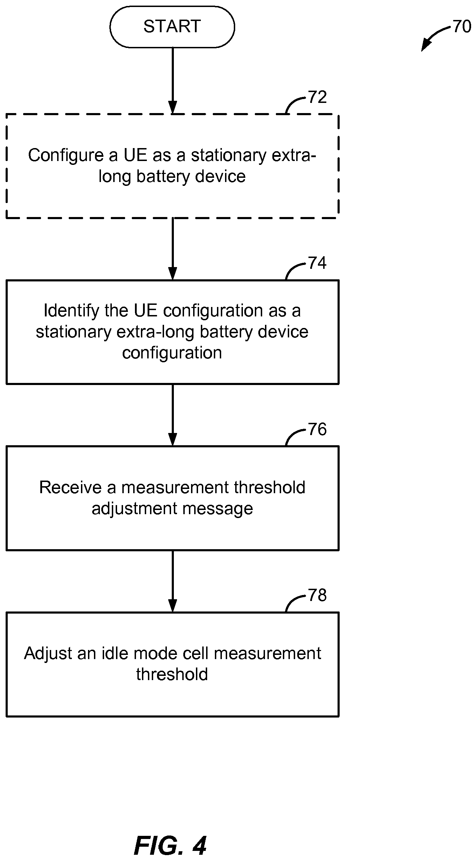

Referring to Fig. 4, an example methodology 70 for enhanced mobile power management is disclosed. In an aspect, methodology 70 may be performed by components associated with a UE (e.g., UE 12). Additionally, while the methodology shown and described as a series of acts, as some acts may, in accordance with one or more aspects, occur in different orders and/or concurrently with other acts from that shown and described herein. For example, it is to be appreciated that a methodology could alternatively be represented as a series of interrelated states or events, such as in a state diagram. Moreover, not all illustrated acts may be required to implement a methodology in accordance with one or more aspects.

In an aspect, at block 72, method 70 optionally includes configuring a UE as a stationary extra-long battery device. For example, as described herein, power management component 18 (Fig. 1) may execute stationary extra-long battery device configuration component 20 to configure UE 12 with the stationary extra-long battery device configuration 38. For example, UE 12 may be configured with a stationary extra-long battery device configuration 38 by provisioning UE 12 using at least one of provisioning via a user input and/or receiving an over-the-air message according to an open mobile alliance device management (OMA-DM) protocol.

In additional aspects, UE 12 may be configured based on device type or international mobile subscriber identity (IMSI) provisioning at the core network or evolved packet core (EPC). As a further example, configuration of UE 12 may be made based on the operating environment of UE 12. Further, in some aspects, a network operator, a network device, a UE manufacturer, or some other entity may pre-program (e.g., prior to UE operation) or program (e.g., based on UE operation) UE 12 in a stationary extra-long battery device configuration 38. Also, in some aspects, UE 12 may configure itself as a stationary extra-long battery device 38.

At block 74, method 70 includes identifying the UE configuration as a stationary extra-long battery device configuration. For example, as described herein, power management component 18 (Fig. 1) may execute stationary extra-long battery device identification component 22 to identify the UE configuration as a stationary extra-long battery device configuration 38. For example, UE 12 may be identified as operating according to extra-long battery device configuration 38 by transmitting, to network entity 14, a stationary extra-long battery device indication 40.

For instance, UE 12 may send stationary extra-long battery device indication 40 in the form of a new UE capability bit or signal designating UE 12 as having stationary extra-long battery device configuration 38. The UE capability bit or signal informs the network of a capability by UE 12 to adjust idle mode measurements. As a further example, UE 12 may be identified as a stationary extra-long battery device 38 based on a particular type or class associated with UE 12. For example, an MTC device may be identified as a stationary extra-long battery device configuration 38. Furthermore, the UE 12 may be identified as a stationary extra-long battery device configuration 38 if a power supply of UE 12 falls below a power supply threshold value.

At block 76, method 70 includes receiving a measurement threshold adjustment message. For example, as described herein, power management component 18 (Fig. 1) may execute communication component 24, and in other aspects, the measurement threshold adjustment message reception component 26, to receive a measurement threshold adjustment message. For example, measurement threshold adjustment message may include an SIB indicating or defining new UE measurement or reselection parameters so as to decrease power consumption .

The UE specific measurement or reselection parameters may include at least one of legacy cell reselection parameters, hierarchical cell structure (HCS) parameters, absolute priority reselection parameters and intra/inter-frequency parameters. In another aspect, UE 12, via for example, communication component 24, may receive the measurement threshold adjustment message in a dedicated RRC signaling message from a network entity. For instance, in this aspect, the network entity does not broadcast new parameters but assigns the new parameters specifically, e.g. in a one-to-one manner, to UE 12 when the network identifies or is informed or provided with an indication (e.g., either by the UE or by the core network (CN) / evolved packet core (EPC)) that UE 12 is stationary.

At block 78, method 70 includes adjusting an idle mode cell measurement threshold based on the measurement threshold adjustment message. For example, as described herein, power management component 18 (Fig. 1) may execute the adjustment component 28 to adjust an idle mode cell measurement threshold. In some aspects, adjusting the idle mode cell measurement threshold includes decreasing a value of the idle mode cell measurement threshold from a current measurement threshold value to a decreased idle mode measurement threshold value. Further, adjusting the idle mode cell measurement thresholds includes reducing a number or a frequency of cell measurements. In further aspects, adjusting the idle mode cell measurement thresholds includes adjusting a dedicated property of UE 12. For instance, the dedicated property adjustment may include adjusting at least one idle mode cell measurement or reselection priority.

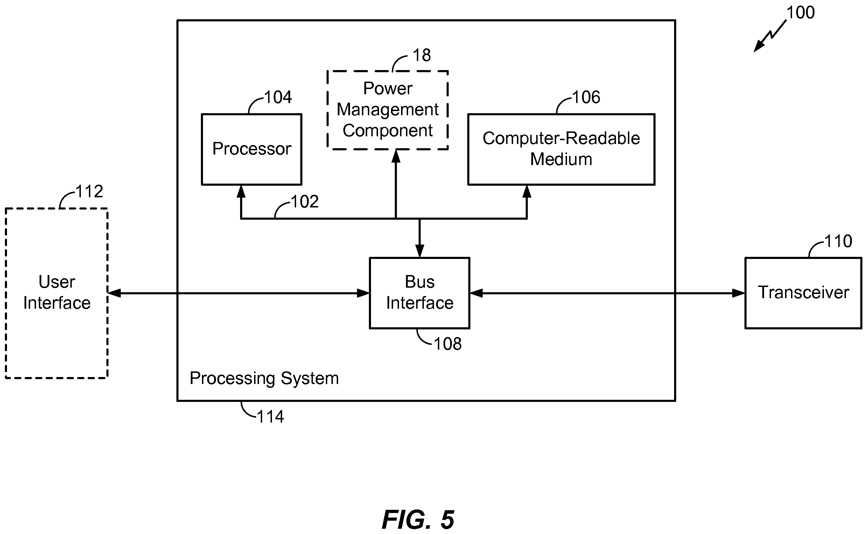

Fig. 5 is a block diagram illustrating an example of a hardware implementation for an apparatus 100 employing a processing system 114, wherein the system may be the same as or similar to UE 12 executing at least power management component 18 (Fig. 1). In an aspect, any of UE 12, or the one or more network entities, such as network entity 14, may be represented by a specially programmed or configured computer device 100. In this example, the processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors, represented generally by the processor 104, and computer-readable media, represented generally by the computer-readable medium 106.

The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatus over a transmission medium. Depending upon the nature of the apparatus, a user interface 112 (e.g., keypad, display, speaker, microphone, joystick) may also be provided.

The processor 104 is responsible for managing the bus 102 and general processing, including the execution of software stored on the computer-readable medium 106. The software, when executed by the processor 104, causes the processing system 114 to perform the various functions described infra for any particular apparatus. The computer-readable medium 106 may also be used for storing data that is manipulated by the processor 104 when executing software.

In an aspect, power management component 18 (Fig. 1) may be implemented by any one or any combination of processor 104 and computer-readable medium 106. For example, the processor 104 and/or computer readable medium 106 may be configured to, via the power management component 18, to adjust an idle mode cell measurement threshold value based on the measurement threshold adjustment message.

The various concepts presented throughout this disclosure may be implemented across a broad variety of telecommunication systems, network architectures, and communication standards.

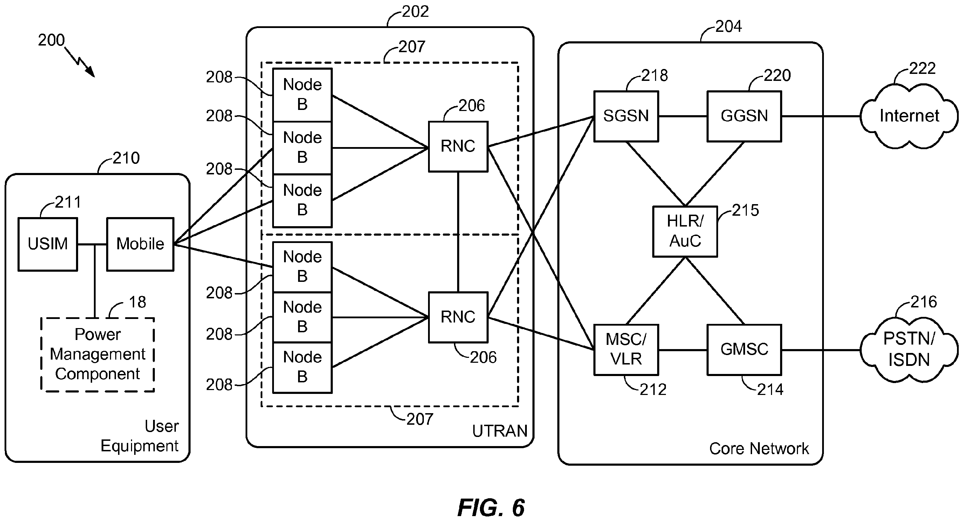

By way of example and without limitation, the aspects of the present disclosure illustrated in Fig. 6 are presented with reference to a UMTS system 200 employing a W-CDMA air interface and including a UE 210 that may be the same as UE 12 (Fig. 1), e.g., power management component 18 (Fig. 1) as described herein. A UMTS network includes three interacting domains: a Core Network (CN) 204, a UMTS Terrestrial Radio Access Network (UTRAN) 202, and User Equipment (UE) 210. In this example, the UTRAN 202 provides various wireless services including telephony, video, data, messaging, broadcasts, and/or other services. The UTRAN 202 may include a plurality of Radio Network Subsystems (RNSs) such as an RNS 207, each controlled by a respective Radio Network Controller (RNC) such as an RNC 206. Here, the UTRAN 202 may include any number of RNCs 206 and RNSs 207 in addition to the RNCs 206 and RNSs 207 illustrated herein. The RNC 206 is an apparatus responsible for, among other things, assigning, reconfiguring and releasing radio resources within the RNS 207. The RNC 206 may be interconnected to other RNCs (not shown) in the UTRAN 202 through various types of interfaces such as a direct physical connection, a virtual network, or the like, using any suitable transport network.

Communication between a UE 210 and a Node B 208 may be considered as including a physical (PHY) layer and a medium access control (MAC) layer. Further, communication between a UE 210 and an RNC 206 by way of a respective Node B 208 may be considered as including a radio resource control (RRC) layer. In the instant specification, the PHY layer may be considered layer 1; the MAC layer may be considered layer 2; and the RRC layer may be considered layer 3. Information hereinbelow utilizes terminology introduced in the RRC Protocol Specification, 3GPP TS 25.331 v9.1.0.

The geographic region covered by the RNS 207 may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, three Node Bs 208 are shown in each RNS 207; however, the RNSs 207 may include any number of wireless Node Bs. The Node Bs 208 provide wireless access points to a CN 204 for any number of mobile apparatuses. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, or any other similar functioning device. The mobile apparatus is commonly referred to as a UE in UMTS applications, but may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a terminal, a user agent, a mobile client, a client, or some other suitable terminology. In a UMTS system, the UE 210 may further include a universal subscriber identity module (USEM) 211, which contains a user's subscription information to a network. For illustrative purposes, one UE 210 is shown in communication with a number of the Node Bs 208. The DL, also called the forward link, refers to the communication link from a Node B 208 to a UE 210, and the UL, also called the reverse link, refers to the communication link from a UE 210 to a Node B 208.

The CN 204 interfaces with one or more access networks, such as the UTRAN 202. As shown, the CN 204 is a GSM core network. However, as those skilled in the art will recognize, the various concepts presented throughout this disclosure may be implemented in a RAN, or other suitable access network, to provide UEs with access to types of CNs other than GSM networks.

The CN 204 includes a circuit-switched (CS) domain and a packet-switched (PS) domain. Some of the circuit-switched elements are a Mobile services Switching Centre (MSC), a Visitor location register (VLR) and a Gateway MSC. Packet-switched elements include a Serving GPRS Support Node (SGSN) and a Gateway GPRS Support Node (GGSN). Some network elements, like EIR, HLR, VLR and AuC may be shared by both of the circuit-switched and packet-switched domains. In the illustrated example, the CN 204 supports circuit-switched services with a MSC 212 and a GMSC 214. In some applications, the GMSC 214 may be referred to as a media gateway (MGW). One or more RNCs, such as the RNC 206, may be connected to the MSC 212. The MSC 212 is an apparatus that controls call setup, call routing, and UE mobility functions. The MSC 212 also includes a VLR that contains subscriber-related information for the duration that a UE is in the coverage area of the MSC 212. The GMSC 214 provides a gateway through the MSC 212 for the UE to access a circuit-switched network 216. The GMSC 214 includes a home location register (HLR) 215 containing subscriber data, such as the data reflecting the details of the services to which a particular user has subscribed. The HLR is also associated with an authentication center (AuC) that contains subscriber-specific authentication data. When a call is received for a particular UE, the GMSC 214 queries the HLR 215 to determine the UE's location and forwards the call to the particular MSC serving that location.

The CN 204 also supports packet-data services with a serving GPRS support node (SGSN) 218 and a gateway GPRS support node (GGSN) 220. GPRS, which stands for General Packet Radio Service, is designed to provide packet-data services at speeds higher than those available with standard circuit-switched data services. The GGSN 220 provides a connection for the UTRAN 202 to a packet-based network 222. The packet-based network 222 may be the Internet, a private data network, or some other suitable packet-based network. The primary function of the GGSN 220 is to provide the UEs 210 with packet-based network connectivity. Data packets may be transferred between the GGSN 220 and the UEs 210 through the SGSN 218, which performs primarily the same functions in the packet-based domain as the MSC 212 performs in the circuit-switched domain.

An air interface for UMTS may utilize a spread spectrum Direct-Sequence Code Division Multiple Access (DS-CDMA) system. The spread spectrum DS-CDMA spreads user data through multiplication by a sequence of pseudorandom bits called chips. The "wideband" W-CDMA air interface for UMTS is based on such direct sequence spread spectrum technology and additionally calls for a frequency division duplexing (FDD). FDD uses a different carrier frequency for the UL and DL between a Node B 208 and a UE 210. Another air interface for UMTS that utilizes DS-CDMA, and uses time division duplexing (TDD), is the TD-SCDMA air interface. Those skilled in the art will recognize that although various examples described herein may refer to a W-CDMA air interface, the underlying principles may be equally applicable to a TD-SCDMA air interface.

An HSPA air interface includes a series of enhancements to the 3G/W-CDMA air interface, facilitating greater throughput and reduced latency. Among other modifications over prior releases, HSPA utilizes hybrid automatic repeat request (HARQ), shared channel transmission, and adaptive modulation and coding. The standards that define HSPA include HSDPA (high speed downlink packet access) and HSUPA (high speed uplink packet access, also referred to as enhanced uplink, or EUL).

HSDPA utilizes as its transport channel the high-speed downlink shared channel (HS-DSCH). The HS-DSCH is implemented by three physical channels: the high-speed physical downlink shared channel (HS-PDSCH), the high-speed shared control channel (HS-SCCH), and the high-speed dedicated physical control channel (HS-DPCCH).

Among these physical channels, the HS-DPCCH carries the HARQ ACK/NACK signaling on the uplink to indicate whether a corresponding packet transmission was decoded successfully. That is, with respect to the downlink, the UE 210 provides feedback to the node B 208 over the HS-DPCCH to indicate whether it correctly decoded a packet on the downlink.

HS-DPCCH further includes feedback signaling from the UE 210 to assist the node B 208 in taking the right decision in terms of modulation and coding scheme and precoding weight selection, this feedback signaling including the CQI and PCI.

"HSPA Evolved" or HSPA+ is an evolution of the HSPA standard that includes MIMO and 64-QAM, enabling increased throughput and higher performance. That is, in an aspect of the disclosure, the node B 208 and/or the UE 210 may have multiple antennas supporting MIMO technology. The use of MIMO technology enables the node B 208 to exploit the spatial domain to support spatial multiplexing, beamforming, and transmit diversity.

Multiple Input Multiple Output (MIMO) is a term generally used to refer to multi-antenna technology, that is, multiple transmit antennas (multiple inputs to the channel) and multiple receive antennas (multiple outputs from the channel). MIMO systems generally enhance data transmission performance, enabling diversity gains to reduce multipath fading and increase transmission quality, and spatial multiplexing gains to increase data throughput.

Spatial multiplexing may be used to transmit different streams of data simultaneously on the same frequency. The data steams may be transmitted to a single UE 210 to increase the data rate or to multiple UEs 210 to increase the overall system capacity. This is achieved by spatially precoding each data stream and then transmitting each spatially precoded stream through a different transmit antenna on the downlink. The spatially precoded data streams arrive at the UE(s) 210 with different spatial signatures, which enables each of the UE(s) 210 to recover the one or more the data streams destined for that UE 210. On the uplink, each UE 210 may transmit one or more spatially precoded data streams, which enables the node B 208 to identify the source of each spatially precoded data stream.

Spatial multiplexing may be used when channel conditions are good. When channel conditions are less favorable, beamforming may be used to focus the transmission energy in one or more directions, or to improve transmission based on characteristics of the channel. This may be achieved by spatially precoding a data stream for transmission through multiple antennas. To achieve good coverage at the edges of the cell, a single stream beamforming transmission may be used in combination with transmit diversity.

Generally, for MIMO systems utilizing n transmit antennas, n transport blocks may be transmitted simultaneously over the same carrier utilizing the same channelization code. Note that the different transport blocks sent over the n transmit antennas may have the same or different modulation and coding schemes from one another.

On the other hand, Single Input Multiple Output (SIMO) generally refers to a system utilizing a single transmit antenna (a single input to the channel) and multiple receive antennas (multiple outputs from the channel). Thus, in a SIMO system, a single transport block is sent over the respective carrier.

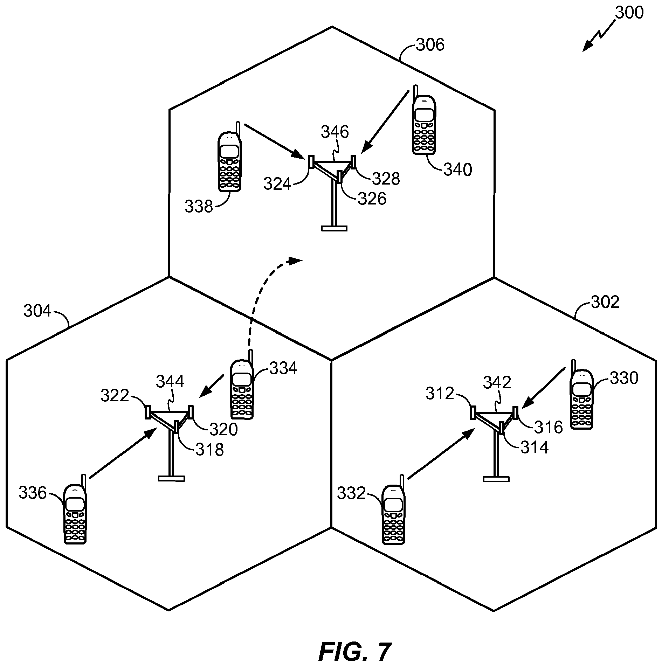

Referring to Fig. 7, an access network 300 in a UTRAN architecture is illustrated. The multiple access wireless communication system includes multiple cellular regions (cells), including cells 302, 304, and 306, each of which may include one or more sectors. The multiple sectors can be formed by groups of antennas with each antenna responsible for communication with UEs in a portion of the cell. For example, in cell 302, antenna groups 312, 314, and 316 may each correspond to a different sector. In cell 304, antenna groups 318, 320, and 322 each correspond to a different sector. In cell 306, antenna groups 324, 326, and 328 each correspond to a different sector. The cells 302, 304 and 306 may include several wireless communication devices, e.g., User Equipment or UEs, which may be in communication with one or more sectors of each cell 302, 304 or 306. For example, UEs 330 and 332 may be in communication with Node B 342, UEs 334 and 336 may be in communication with Node B 344, and UEs 338 and 340 can be in communication with Node B 346. Here, each Node B 342, 344, 346 is configured to provide an access point to a CN 204 (see FIG. 2) for all the UEs 330, 332, 334, 336, 338, 340 in the respective cells 302, 304, and 306. In an aspect, UEs 330, 332, 334, 336, 338 and 340 may include the power management component 18 (Fig. 1).

As the UE 334 moves from the illustrated location in cell 304 into cell 306, a serving cell change (SCC) or handover may occur in which communication with the UE 334 transitions from the cell 304, which may be referred to as the source cell, to cell 306, which may be referred to as the target cell. Management of the handover procedure may take place at the UE 334, at the Node Bs corresponding to the respective cells, at a radio network controller 206 (see Fig. 6), or at another suitable node in the wireless network. For example, during a call with the source cell 304, or at any other time, the UE 334 may monitor various parameters of the source cell 304 as well as various parameters of neighboring cells such as cells 306 and 302. Further, depending on the quality of these parameters, the UE 334 may maintain communication with one or more of the neighboring cells. During this time, the UE 334 may maintain an Active Set, that is, a list of cells that the UE 334 is simultaneously connected to (i.e., the UTRA cells that are currently assigning a downlink dedicated physical channel DPCH or fractional downlink dedicated physical channel F-DPCH to the UE 334 may constitute the Active Set).

The modulation and multiple access scheme employed by the access network 300 may vary depending on the particular telecommunications standard being deployed. By way of example, the standard may include Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

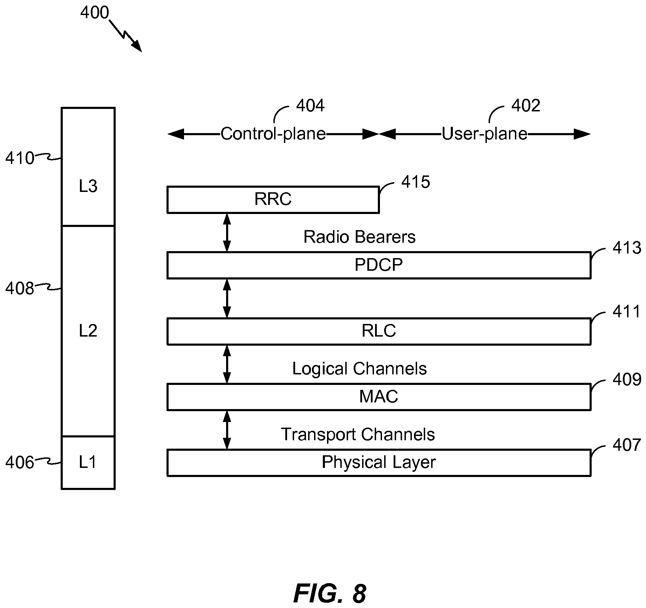

The radio protocol architecture may take on various forms depending on the particular application. An example for an HSPA system will now be presented with reference to Fig. 8.

Referring to Fig. 8 an example radio protocol architecture 400 relates to the user plane 402 and the control plane 404 of a user equipment (UE) or node B/base station. For example, architecture 400 may be included in a UE such as UE 12 (Fig. 1) including power management component 18 The radio protocol architecture 400 for the UE and node B is shown with three layers: Layer 1 406, Layer 2 408, and Layer 3 410. Layer 1 406 is the lowest lower and implements various physical layer signal processing functions. As such, Layer 1 406 includes the physical layer 407. Layer 2 (L2 layer) 408 is above the physical layer 407 and is responsible for the link between the UE and node B over the physical layer 407. Layer 3 (L3 layer) 410 includes a radio resource control (RRC) sublayer 415. The RRC sublayer 415 handles the control plane signaling of Layer 3 between the UE and the UTRAN. Further, UE(s) in Fig. 8 may include the power management component 18 of Fig. 1.

In the user plane, the L2 layer 408 includes a media access control (MAC) sublayer 409, a radio link control (RLC) sublayer 411, and a packet data convergence protocol (PDCP) 413 sublayer, which are terminated at the node B on the network side. Although not shown, the UE may have several upper layers above the L2 layer 408 including a network layer (e.g., IP layer) that is terminated at a PDN gateway on the network side, and an application layer that is terminated at the other end of the connection (e.g., far end UE, server, etc.).

The PDCP sublayer 413 provides multiplexing between different radio bearers and logical channels. The PDCP sublayer 413 also provides header compression for upper layer data packets to reduce radio transmission overhead, security by ciphering the data packets, and handover support for UEs between node Bs. The RLC sublayer 411 provides segmentation and reassembly of upper layer data packets, retransmission of lost data packets, and reordering of data packets to compensate for out-of-order reception due to hybrid automatic repeat request (HARQ). The MAC sublayer 409 provides multiplexing between logical and transport channels. The MAC sublayer 409 is also responsible for allocating the various radio resources (e.g., resource blocks) in one cell among the UEs. The MAC sublayer 409 is also responsible for HARQ operations.

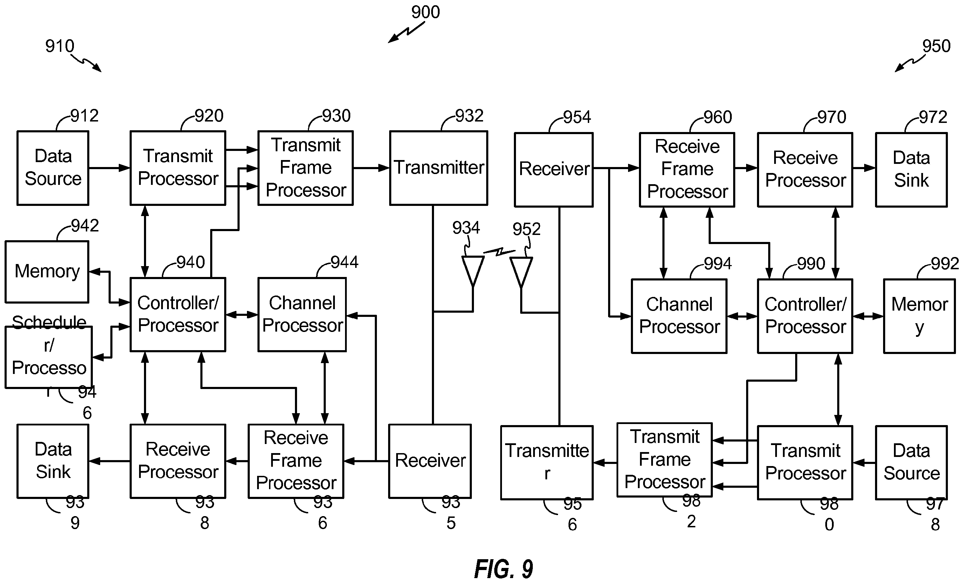

Fig. 9 is a block diagram of a Node B 510 in communication with a UE 550, where the Node B 510 may be the Node B 208 in Fig. 6, and the UE 550 may be the UE 210 in Fig. 6, or UE 12 in Fig. 1 including power management component 18. In the downlink communication, a transmit processor 520 may receive data from a data source 512 and control signals from a controller/processor 540. The transmit processor 520 provides various signal processing functions for the data and control signals, as well as reference signals (e.g., pilot signals). For example, the transmit processor 520 may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 544 may be used by a controller/processor 540 to determine the coding, modulation, spreading, and/or scrambling schemes for the transmit processor 520. These channel estimates may be derived from a reference signal transmitted by the UE 550 or from feedback from the UE 550. The symbols generated by the transmit processor 520 are provided to a transmit frame processor 530 to create a frame structure. The transmit frame processor 530 creates this frame structure by multiplexing the symbols with information from the controller/processor 540, resulting in a series of frames. The frames are then provided to a transmitter 532, which provides various signal conditioning functions including amplifying, filtering, and modulating the frames onto a carrier for downlink transmission over the wireless medium through antenna 534. The antenna 534 may include one or more antennas, for example, including beam steering bidirectional adaptive antenna arrays or other similar beam technologies.

At the UE 550, a receiver 554 receives the downlink transmission through an antenna 552 and processes the transmission to recover the information modulated onto the carrier. The information recovered by the receiver 554 is provided to a receive frame processor 560, which parses each frame, and provides information from the frames to a channel processor 594 and the data, control, and reference signals to a receive processor 570. The receive processor 570 then performs the inverse of the processing performed by the transmit processor 520 in the Node B 510. More specifically, the receive processor 570 descrambles and despreads the symbols, and then determines the most likely signal constellation points transmitted by the Node B 510 based on the modulation scheme. These soft decisions may be based on channel estimates computed by the channel processor 594. The soft decisions are then decoded and deinterleaved to recover the data, control, and reference signals. The CRC codes are then checked to determine whether the frames were successfully decoded. The data carried by the successfully decoded frames will then be provided to a data sink 572, which represents applications running in the UE 550 and/or various user interfaces (e.g., display). Control signals carried by successfully decoded frames will be provided to a controller/processor 590. When frames are unsuccessfully decoded by the receiver processor 570, the controller/processor 590 may also use an acknowledgement (ACK) and/or negative acknowledgement (NACK) protocol to support retransmission requests for those frames.

In the uplink, data from a data source 578 and control signals from the controller/processor 590 are provided to a transmit processor 580. The data source 578 may represent applications running in the UE 550 and various user interfaces (e.g., keyboard). Similar to the functionality described in connection with the downlink transmission by the Node B 510, the transmit processor 580 provides various signal processing functions including CRC codes, coding and interleaving to facilitate FEC, mapping to signal constellations, spreading with OVSFs, and scrambling to produce a series of symbols. Channel estimates, derived by the channel processor 594 from a reference signal transmitted by the Node B 510 or from feedback contained in the midamble transmitted by the Node B 510, may be used to select the appropriate coding, modulation, spreading, and/or scrambling schemes. The symbols produced by the transmit processor 580 will be provided to a transmit frame processor 582 to create a frame structure. The transmit frame processor 582 creates this frame structure by multiplexing the symbols with information from the controller/processor 590, resulting in a series of frames. The frames are then provided to a transmitter 556, which provides various signal conditioning functions including amplification, filtering, and modulating the frames onto a carrier for uplink transmission over the wireless medium through the antenna 552.

The uplink transmission is processed at the Node B 510 in a manner similar to that described in connection with the receiver function at the UE 550. A receiver 535 receives the uplink transmission through the antenna 534 and processes the transmission to recover the information modulated onto the carrier. The information recovered by the receiver 535 is provided to a receive frame processor 536, which parses each frame, and provides information from the frames to the channel processor 544 and the data, control, and reference signals to a receive processor 538. The receive processor 538 performs the inverse of the processing performed by the transmit processor 580 in the UE 550. The data and control signals carried by the successfully decoded frames may then be provided to a data sink 539 and the controller/processor, respectively. If some of the frames were unsuccessfully decoded by the receive processor, the controller/processor 540 may also use an acknowledgement (ACK) and/or negative acknowledgement (NACK) protocol to support retransmission requests for those frames.

The controller/processors 540 and 590 may be used to direct the operation at the Node B 510 and the UE 550, respectively. For example, the controller/processors 540 and 590 may provide various functions including timing, peripheral interfaces, voltage regulation, power management, and other control functions. The computer readable media of memories 542 and 592 may store data and software for the Node B 510 and the UE 550, respectively. A scheduler/processor 546 at the Node B 510 may be used to allocate resources to the UEs and schedule downlink and/or uplink transmissions for the UEs.

Several aspects of a telecommunications system have been presented with reference to a W-CDMA system. As those skilled in the art will readily appreciate, various aspects described throughout this disclosure may be extended to other telecommunication systems, network architectures and communication standards.

By way of example, various aspects may be extended to other UMTS systems such as TD-SCDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

## Claims

1. A method of power management performed by a user equipment, UE, in a wireless communication network, the method comprising:
identifying (74) that the UE is operating according to a configuration that is a stationary extra-long battery device configuration based on device characteristics and/or thresholds;
**characterized by**:
transmitting a stationary extra-long battery device indication;
in response to the transmitting, receiving (76) a measurement threshold adjustment message; and
adjusting (78) an idle mode cell measurement threshold value based on the measurement threshold adjustment message.

2. The method of claim 1, comprising identifying (74) stationary extra-long battery device configuration based on the UE being a machine type communication device.

3. The method of claim 1, comprising identifying (74) that a user equipment, UE, is operating according to stationary extra-long battery device configuration based on a power supply of the UE being below a power supply threshold value.

4. The method of claim 1, wherein comprising identifying (74) that a user equipment, UE, is operating according to stationary extra-long battery device configuration based on accessibility to power supply charging or replacement.

5. The method of claim 1, wherein adjusting (78) the idle mode cell measurement threshold comprises decreasing a value of the idle mode cell measurement threshold from a current measurement threshold value to a decreased idle mode measurement threshold value.

6. The method of claim 1, wherein adjusting (78) the idle mode cell measurement threshold comprises reducing a number or a frequency of cell measurements.

7. The method of claim 1, wherein adjusting (78) the idle mode cell measurement threshold comprises adjusting a dedicated property of the UE and wherein adjusting the dedicated property comprises adjusting at least one idle mode cell measurement or reselection priority.

8. The method of claim 1, wherein receiving (76) the measurement threshold adjustment message comprises receiving in a system information block, SIB, from a network.

9. The method of claim 8, wherein receiving the SIB from the network comprises receiving UE specific measurement or reselection configuration parameters.

10. The method of claim 9, wherein receiving UE specific measurement or reselection configuration parameters comprises receiving at least one of legacy cell reselection parameters, HCS parameters, absolute priority reselection parameters and intra/inter-frequency parameters or wherein the UE specific measurement or reselection configuration parameters comprises idle mode measurement or reselection configuration parameters.

11. The method of claim 1, wherein receiving (76) the measurement threshold adjustment message further comprises receiving in a dedicated RRC signaling message from a network.

12. The method of claim 1, further comprising configuring (72) the UE to remain stationary for a long duration or to have longer operation time, by adjusting communication operating parameters to decrease power consumption.

13. The method of claim 12, wherein configuring (72) comprises provisioning the UE using at least one of provisioning via a user input and receiving an over-the-air message according to an open mobile alliance device management, OMA-DM, protocol.

14. A user equipment for power management, comprising
means for performing the method of claim 1.

15. A computer-readable medium comprising instructions which when executed by a processor perform the method of claim 1.

## Patentansprüche

1. Ein Verfahren zur Leistungsverwaltung, das durch eine Nutzereinrichtung bzw. UE (UE = user equipment) in einem Drahtloskommunikationsnetzwerk durchgeführt wird, wobei das Verfahren Folgendes aufweist:
Identifizieren (74), dass die UE gemäß einer Konfiguration arbeitet, die eine Konfiguration einer stationären Einrichtung mit Batterie und extra langer Laufzeit ist, basierend auf Einrichtungscharakteristiken und/oder Schwellenwerten;
**gekennzeichnet durch**:
Senden einer Anzeige einer stationären Einrichtung mit Batterie und extra langer Laufzeit;
ansprechend auf das Senden, Empfangen (76) einer Messungsschwellenwertanpassungsnachricht; und
Anpassen (78) eines Ruhemoduszellenmessungsschwellenwertes basierend auf der Messungsschwellenwertanpassungsnachricht.

2. Verfahren nach Anspruch 1, das Identifizieren (74) einer Konfiguration einer stationären Einrichtung mit Batterie und extra langer Laufzeit basierend darauf aufweist, dass die UE eine Machine-Type-Communication- bzw. MTC-Einrichtung ist.

3. Verfahren nach Anspruch 1, das Identifizieren (74) aufweist, dass eine Nutzereinrichtung bzw. UE gemäß einer Konfiguration einer stationären Einrichtung mit Batterie und extra langer Laufzeit arbeitet basierend darauf, dass eine Leistungsversorgung der UE unter einem Leistungsversorgungsschwellenwert ist.

4. Verfahren nach Anspruch 1, das weiter Identifizieren (74) aufweist, dass eine Nutzereinrichtung bzw. UE gemäß einer Konfiguration einer stationären Einrichtung mit Batterie und extra langer Laufzeit arbeitet basierend auf einer Zugänglichkeit zu einer Leistungsversorgungsladung oder einem Leistungsversorgungsersatz.

5. Verfahren nach Anspruch 1, wobei das Anpassen (78) des Ruhemoduszellenmessungsschwellenwertes Verringern eines Wertes des Ruhemoduszellenmessungsschwellenwertes von einem aktuellen Messungsschwellenwert zu einem verringerten Ruhemodusmessungsschwellenwert aufweist.

6. Verfahren nach Anspruch 1, wobei das Anpassen (78) des Ruhemoduszellenmessungsschwellenwertes Verringern einer Anzahl oder einer Frequenz von Zellenmessungen aufweist.

7. Verfahren nach Anspruch 1, wobei das Anpassen (78) des Ruhemoduszellenmessungsschwellenwertes Anpassen einer dedizierten bzw. speziell vorgesehenen Eigenschaft der UE aufweist, und wobei das Anpassen der dedizierten Eigenschaft Anpassen wenigstens einer Ruhemoduszellenmessung oder Neuauswahlpriorität aufweist.

8. Verfahren nach Anspruch 1, wobei das Empfangen (76) der Messungsschwellenwertanpassungsnachricht Empfangen, in einem Systeminformationsblock bzw. SIB von einem Netzwerk aufweist.

9. Verfahren nach Anspruch 8, wobei das Empfangen des SIB von dem Netzwerk Empfangen von UE-spezifischen Messungs- oder Neuauswahlkonfigurationsparametern aufweist.

10. Verfahren nach Anspruch 9, wobei das Empfangen UE-spezifischer Messungs- oder Neuauswahlkonfigurationsparameter Empfangen von wenigstens einem von Folgendem aufweist: Altsystem- bzw. Legacy-Zellneuauswahlparametern, HCS-Parametern, Neuauswahlparametern einer absoluten Priorität und Intra/Inter-Frequenzparametern, oder wobei die UE-spezifischen Messungs- oder Neuauswahlkonfigurationsparameter Ruhemodusmessungs- oder Neuauswahlkonfigurationsparameter aufweisen.

11. Verfahren nach Anspruch 1, wobei das Empfangen (76) der Messungsschwellenwertanpassungsnachricht weiter Empfangen in einer dedizierten RRC-Signalisierungsnachricht von einem Netzwerk aufweist.

12. Verfahren nach Anspruch 1, das weiter Konfigurieren (72) der UE aufweist für eine lange Dauer stationär zu bleiben oder eine längere Betriebszeit zu haben durch Anpassen von Kommunikationsbetriebsparametern, um einen Leistungsverbrauch zu verringern.

13. Verfahren nach Anspruch 12, wobei das Konfigurieren (72) Bereitstellen der UE aufweist unter Verwendung von wenigstens einem von Bereitstellen über eine Nutzereingabe oder Empfangen einer Luftschnittstellennachricht gemäß einem Open-Mobile-Alliance-Device-Management- bzw. OMA-DM-Protokoll.

14. Eine Nutzereinrichtung zur Leistungsverwaltung, die Folgendes aufweist:
Mittel zum Durchführen des Verfahrens nach Anspruch 1.

15. Ein computerlesbares Medium, das Instruktionen aufweist, die, wenn sie durch einen Prozessor ausgeführt werden, das Verfahren nach Anspruch 1 durchführen.

## Revendications

1. Un procédé de gestion de l'énergie exécuté par un équipement d'utilisateur, UE, dans un réseau de communication sans fil, le procédé comprenant :
l'identification (74) que l'UE fonctionne selon une configuration qui est une configuration de dispositif de batterie de très longue durée stationnaire en fonction de seuils et/ou de caractéristiques de dispositif,
**caractérisé par** :
la transmission d'une indication de dispositif de batterie de très longue durée stationnaire,
en réponse à la transmission, la réception (76) d'un message d'ajustement de seuil de mesure, et
l'ajustement (78) d'une valeur de seuil de mesure de cellule en mode repos en fonction du message d'ajustement de seuil de mesure.

2. Le procédé selon la Revendication 1, comprenant l'identification (74) d'une configuration de dispositif de batterie de très longue durée stationnaire en fonction du fait que l'UE est un dispositif de communication de type machine.

3. Le procédé selon la Revendication 1, comprenant l'identification (74) qu'un équipement d'utilisateur, UE, fonctionne selon une configuration de dispositif de batterie de très longue durée stationnaire en fonction du fait qu'une alimentation électrique de l'UE est sous une valeur seuil d'alimentation électrique.

4. Le procédé selon la Revendication 1, comprenant l'identification (74) qu'un équipement d'utilisateur, UE, fonctionne selon une configuration de dispositif de batterie de très longue durée stationnaire en fonction d'une accessibilité à un chargement ou un remplacement d'alimentation électrique.

5. Le procédé selon la Revendication 1, où l'ajustement (78) du seuil de mesure de cellule en mode repos comprend la diminution d'une valeur du seuil de mesure de cellule en mode repos d'une valeur de seuil de mesure courante vers une valeur de seuil de mesure en mode repos diminuée.

6. Le procédé selon la Revendication 1, où l'ajustement (78) du seuil de mesure de cellule en mode repos comprend la réduction d'un nombre ou d'une fréquence de mesures de cellule.

7. Le procédé selon la Revendication 1, où l'ajustement (78) du seuil de mesure de cellule en mode repos comprend l'ajustement d'une propriété dédiée de l'UE et où l'ajustement de la propriété dédiée comprend l'ajustement d'au moins une mesure de cellule en mode repos ou une priorité de resélection.

8. Le procédé selon la Revendication 1, où la réception (76) du message d'ajustement de seuil de mesure comprend la réception dans un bloc d'informations système, SIB, à partir d'un réseau.

9. Le procédé selon la Revendication 8, où la réception du SIB à partir du réseau comprend la réception de paramètres de configuration de mesure ou de resélection spécifiques à l'UE.

10. Le procédé selon la Revendication 9, où la réception de paramètres de configuration de mesure ou de resélection spécifiques à l'UE comprend la réception d'au moins un élément parmi des paramètres de resélection de cellule patrimoniaux, des paramètres HCS, des paramètres de resélection de priorité absolus et des paramètres intra/inter-fréquences ou où les paramètres de configuration de mesure ou de resélection spécifiques à l'UE comprennent des paramètres de configuration de mesure ou de resélection en mode repos.

11. Le procédé selon la Revendication 1, où la réception (76) du message d'ajustement de seuil de mesure comprend en outre la réception dans un message de signalisation RRC dédié à partir d'un réseau.

12. Le procédé selon la Revendication 1, comprenant en outre la configuration (72) de l'UE de façon à demeurer stationnaire pendant une longue durée ou à présenter une durée de fonctionnement plus longue par l'ajustement de paramètres de fonctionnement de communication pour diminuer une consommation d'énergie.

13. Le procédé selon la Revendication 12, où la configuration (72) comprend l'approvisionnement de l'UE au moyen d'au moins une opération parmi l'approvisionnement par l'intermédiaire d'une entrée d'utilisateur et la réception d'un message hertzien selon un protocole de gestion de dispositif Open Mobile Alliance, OMA-DM.

14. Un équipement d'utilisateur destiné à une gestion de l'énergie, comprenant un moyen d'exécution du procédé selon la Revendication 1.

15. Un support lisible par ordinateur contenant des instructions qui, lorsqu'elles sont exécutées par un processeur, exécutent le procédé selon la Revendication 1.
